# EUROPEAN PATENT APPLICATION

(11) **EP 1 479 738 A1**
(43) Date of publication of application: **24.11.2004**
(21) Application number: 03076509.3
(22) Date of filing: 20.05.2003
(51) Int. Cl.: C09D 7/12, C08J 7/04, C01B 13/00, C08K 13/00

(54) **Hydrophobic coatings comprising reactive nano-particles**

(71) Applicant: DSM IP Assets B.V., 6411 TE Heerlen (NL)
(72) Inventor: Thies, Jens Christoph, 6229 AL Maastricht (NL); Meijers, Guido Jozefina Wilhelmus, 6171 NL Stein (NL); Tronche, Christopher Frederic, 60193 Schaumburg, IL (US); Currie, Edwin, 6133 AM Sittard (NL); Southwell, John Edmond, 60137 Elgin, IL (US); Pitkin, Jonathan Andrew, King's Lynn, Norfolk PE30 3JG (GB)
(74) Representative: Habets, W.J.A.

(57) **Abstract**

The invention relates to hydrophobic coating comprising reactive inorganic nano-particles, a process for their manufacture as well as their use in industrial processes. These coatings combine hydrophobic or even super-hydrophobic properties with superior mechanical properties and easy processability. Some superhydrophobic coatings may even have self-cleaning properties. These hydrophobic and superhydrophobic coatings may be applied in the food industry, exterior or interior decoration, automobile industry and display industry. Also comprised within the invention are inorganic reactive nano-particles, and finished articles comprising a coating of inorganic nano-particles.

## Description

The invention relates to hydrophobic coatings comprising inorganic nano-particles, a process for their manufacture as well as their use in industrial processes. These coatings combine hydrophobic or even super-hydrophobic properties with superior mechanical properties and easy processability. Some superhydrophobic coatings may even have self-cleaning properties. These hydrophobic and superhydrophobic coatings may be applied in the food industry, exterior or interior decoration, automobile industry and display industry.

Hydrophobic coatings, i.e. coatings that have a low roll-off angle for water droplets, are becoming increasingly popular in numerous applications, such as windows, TV screens, DVD disks, cooking utensils, clothing, medical instruments etc because they are easy to clean and have low adhesive properties. A coating is herein defined as being hydrophobic if its static contact angle of water (θ) is within the limits of approximately 90° and 140°. Generally, a hydrophobic material or coating is characterised by a static contact angle of water of 90° or above. Hydrophobic polymeric materials such as poly(tetrafluorethene) (PTFE) or polypropylene (PP) have been available for decades. These materials suffer from a limited hydrophobicity, as well as inferior mechanical properties as compared to engineering materials or highly crosslinked coatings. For instance, PP has a static contact angle of water of roughly 100° whereas PTFE, which is amongst the most hydrophobic polymeric material known, has a static contact angle of water of roughly 112°.

Some hydrophobic coatings are being referred to in the art as superhydrophobic coatings. Superhydrophobic coatings are generally defined by a static water contact angle above 140° (Nun, Oles & Schleich, Macromol. Symp. 187 (2002) 677-682).

It has recently been realized that surface roughness is the key to superhydrophobicity. Only recently has the underlying cause for high water contact angles been discovered. The leap from hydrophobicity to superhydrophobicity is made via surface roughness on a micron or sub-micron scale, which increases the water contact angle. In general, a high degree of roughness on hydrophobic coatings leads to high water contact angles, which are desirable from the point of non-fouling and cleanability.

Surfaces with superhydrophobic properties are found in nature, for example the lotus leaf or cabbage leaf. The waxes secreted onto the leaf's rough surface reduce the adhesion of water and contaminating particles to the leaf. Water droplets deposited on the leaf simply roll off, gathering dirt particles and cleaning the leaf in the process.

An enhanced hydrophobicity of coatings has been obtained via inclusion of micron-sized spherical particles in a silicone-based paint or polyolefin-based spray (BASF Press release October 28 2002, P345e,Dr Karin Elbl-Weiser, Lotusan, Nature news service/ Macmillan Magazines Ltd 2002). These suspensions are applied as paint or from a spray, yet suffer from a lack in mechanical robustness. The abrasion resistance of such coatings is low and thus the coatings need to be reapplied after a short period of time to maintain the hydrophobic functionality of the surface. Additionally, the coating scatters light in the visible range, this effectively results in an opaque and optically non-transparent coating.

In US6068911, Hitachi described superhydrophobic coatings based also on the principle of surface roughness prepared via UV curing of resins containing non-reactive nano-particles and fluor polymers. Their coating formulation consists of at least two solvents, evaporation of the most volatile solvent drives the fluorpolymer to the surface, making it hydrophobic. The presence of the inert non-reactive nano-particles results in surface roughness and the overall coating exhibits superhydrophobicity. As this technology is based on the evaporation of an organic solvent to create surface roughness during processing, kinetics will play a role in this process. Also, the hardness, durability and abrasion resistance of the coating, although already better than the one from BASF, leaves better performance to be desired.

The approach of Sunyx is to use a non-abrasion-resistant layer that is continuously replenished from a reservoir of mobile fluor-containing agents in an immobile matrix layer with on top a vapour-deposited top layer of inorganic material which has a large degree of roughness and cracks (WO 01/92179). The concept is that the fluorpolymers diffuse through the inorganic layer and cover the surface, thus forming a regenerative surface layer. This results in hard, optically clear surfaces with a high water contact angle and very low roll-off angle. However, the production of such complex structures via vapor deposition is very time-consuming and laborious, and also the area size that can be coated is limited. Also, the release and washing away of the mobile fluorpolymers is environmentally not desirable.

There is a need therefore to obtain further (super)hydrophobic coatings that can more easily be applied and have controlled hydrophobicity and good durability (hardness, scratch resistance and adhesion).

The present invention addresses this need and provides novel hydrophobic coatings comprising inorganic nano-particles. The properties (such as hydrophobicity, hardness, scratch resistance and optical clarity) of the hydrophobic coating according to the invention may be controlled by the choice of reactive inorganic nano-particles, diluents, mixing ratios of nano-particles and diluents and other processing steps.

Surprisingly, a hydrophobic coating with superior mechanical properties may be obtained when inorganic nano-particles with reactive and apolar groups are allowed to react in order to form a coating. Such reactive and apolar groups may simply be chemically grafted to the nano-particle surface. Examples may be inorganic nano-particles with acrylate groups, and apolar chains, e.g. perfluoralkyl chains. For the purpose of the invention reactive inorganic nano-particles are defined herein as nano-particles with reactive and apolar groups attached to them. Reactive groups in this respect means groups capable of cross-linking whereas apolar means groups leading to hydrophobic surface characteristics, such as groups with a low dipole moment. Examples of crosslinking or reactive groups are acrylates, methacrylates, vinyls, thiol groups.

In one embodiment of the invention a hydrophobic coating may be prepared, comprising the inorganic nano-particles. To this effect, reactive inorganic nano-particles are mixed with the usual additives for initiation of the polymeric reaction and adhesion. This coating has a hydrophobicity that is determined by the choice of the nano-particle species. Those skilled in the art will now recognize that the coating properties can also be tuned towards e.g. improved hydrophobicity, improved hardness, improved impact strength etc by varying the ratio of reactive groups to apolar chains, the processing conditions and post-treatment.

Hydrophobicity of the coating may even further be improved by adding a reactive diluent to the reactive inorganic nano-particles. The properties of a coating thus obtained may be tuned towards improved hydrophobicity, improved hardness, improved impact strength etc by varying the ratio of reactive to apolar groups, and/or the ratio of reactive inorganic nano-particles to reactive diluents in the coating, the polarity of the diluents, the processing conditions and post-treatment. For the purpose of the invention, reactive diluents are defined herein as diluents containing reactive groups.

Surprisingly, it was observed that by adding a reactive diluent to reactive inorganic nano-particles, a superhydrophobic coating may be obtained with a static water contact angle above 140°. The hydrophobicity of the coating, may then be controlled via the mixing ratio of the reactive inorganic nano-particles and reactive diluents, the ratio of the reactive versus apolar groups, the processing conditions, coating thickness etc.

Hence, hydrophobic coatings with a great variety of properties may be obtained by the inclusion of inorganic nano-particles, ranging from hard coatings with a low surface roughness to superhydrophobic coatings with a high surface roughness. Also, the superhydrophobic coatings may have self-cleaning properties. In order to be recognized as a self-cleaning coating in the art, usually a coating has to fulfill four requirements, namely 1) a static contact angle of water above 140°, 2) a hysteresis between advancing and receding water contact angles below 10°, 3) a water droplet roll-off angle below 10°, and 4) a limited difference in coloring of the coating during an extended soiling test.

The hydrophobicity and roughness of the coatings may be varied via the chemical composition of the inorganic nano-particles and/or the reactive diluent and processing conditions. It is known that coatings with a roughness much smaller than the wavelength of visible light are optically clear, and may even exhibit anti-reflective properties.[Steiner et al, Science, Vol 283, pg520-522, 1999] If, however, the coating roughness is much larger than that of the wavelength of visible light, the light is scattered from the coating surface, and the coating appears opaque. In the scope of our invention, the surface roughness is controlled via the mixing ratio of the various species in the coating composition (see examples 7 and 8), and thus the optical appearance of the hydrophobic coating may be varied from clear, optionally antireflective, to opaque.

In the framework of this invention the term "nano-particles" is defined as particles of which the majority has a largest dimension of less than a micrometer. For non-spherical particles the longest straight line that can be drawn from one side of a particle to the opposite side is denoted the primary axis. The length of the particle is to be measured along the primary axis, whereas the diameter of the particle is defined as the longest straight line that can be drawn at right angles to the primary axis. In a preferred embodiment, the majority of the nano-particles have a length of less than 350 nm. In a further preferred embodiment, the majority of the nano-particles have a diameter of less than 350 nm. Most preferably all particles have a diameter less than 50 nm. Most preferably, particles used have such a diameter that they do not (significantly) influence the transparency of the eventual coating. Processes for determining the particle diameter include BET adsorption, optical or scanning electron microscopy, or atomic force microscopy (AFM) imaging.

Within the context of the invention the term surface nano-structured coatings refers to coatings with a degree of surface roughness where the dimensions of the features on the surface are larger than or equal to the smallest cross-sectional dimension of an individual nano-particle as defined by the manufacturer.

Suitable inorganic particles are for example oxide particles. Preferred oxide particles are metal oxide particles such as aluminum oxide, siliciumoxide , zirconium oxide, titanium oxide, antimony oxide, zinc oxide, tin oxide, indium oxide, and cerium oxide. It is also possible to use a mixture of particles from different oxides or to use particles of mixed oxides. Preferably, the nano-particles are particles of aluminum oxide, zirconium oxide or silica oxide. The refractive index of the coating and effective refractive index of the coating/air interface can in part be tuned by the choice of oxide used. This is within the skills of a person skilled in the art.

In the framework of the invention, reactive groups are defined as groups capable of crosslinking, such as acrylates, methacrylates, vinyllic species or epoxies. One example of such a group is obtained when the nano-particle is reacted with a species according to formula 1.

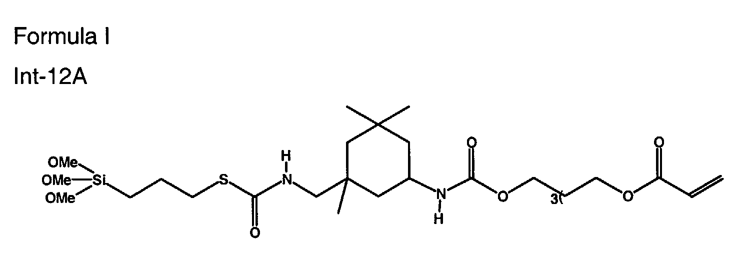

Combinations of compounds that together may result in the formation of a crosslinked phase are for example carboxylic acids and/or carboxylic anhydrides combined with epoxies, acids combined with hydroxy compounds, especially 2-hydroxyalkylamides, amines combined with isocyanates, for example blocked isocyanate, uretdion or carbodiimide, epoxies combined with amines or with dicyandiamides, hydrazinamides combined with isocyanates, hydroxy compounds combined with isocyanates, for example blocked isocyanate, uretdion or carbodiimide, hydroxy compounds combined with anhydrides, hydroxy compounds combined with (etherified) methylolamide ("amino-resins"), thiols combined with isocyanates, thiols combined with acrylates (optionally radical initiated), acetoacetate combined with acrylates, and when cationic crosslinking is used epoxy compounds with epoxy or hydroxy compounds.

Further compounds that may be used as crosslinking groups are moisture curable isocyanates, moisture curable mixtures of alkoxy/acyloxy-silanes, alkoxy titanates, alkoxy zirconates, or urea-, urea/melamine-, melamine- formaldehyde or phenol-formaldehyde (resol, novolac types), or radical curable (peroxide- or photo-initiated) ethylenically unsaturated mono- and polyfunctional monomers and polymers, e.g. acrylates, methacrylates, maleate/vinyl ether), or radical curable (peroxide- or photo-initiated) unsaturated e.g. maleic or fumaric, polyesters in styrene and/or in methacrylates.

Reactive inorganic nano-particles may be made hydrophobic by chemically grafting apolar groups to the surface. In principle, any method for chemical grafting of apolar groups to inorganic nano-particles may be used. The grafting step may for instance be performed using for instance trimethoxy silane species with a hydrophobic group, for example a species according to formula II.

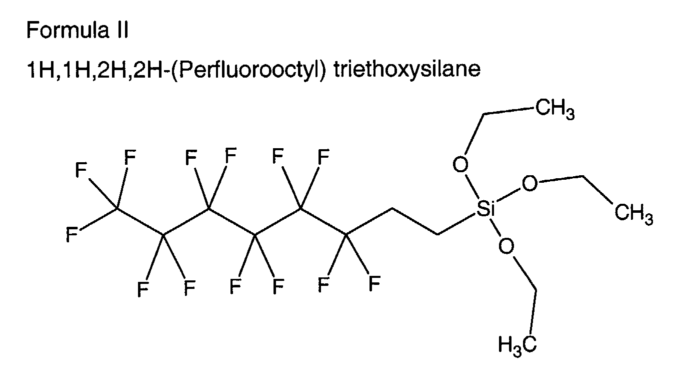

Examples of this are perfluorhexyl ethyl trimethoxysilane, perfluoroctyl ethyl trimethoxysilane or perfluordecyl ethyl trimethoxysilane. Alternatives could be other alkoxysilane perfluor alkyls or alkoxy silane dimethyl siloxanes.

Optionally, the coating composition may comprise reactive diluents. The reactive diluents include monoreactive diluents, i.e. molecules with one reactive group, or multireactive diluents, i.e. molecules with two or more reactive groups. The resulting properties of the coating depend on the choice and amount of reactive diluents. The nature of the reactive diluent may be apolar, and suitable species include fluor-containing species or dimethylsiloxane-containing species. Examples of such diluents may include perfluoroalkyl monoacrylates, perfluoroalkyl monomethacrylates, polydimethylsiloxane monoacrylates, polydimethylsiloxane monomethacrylates, perfluoro polyether monoacrylates, perfluorinated polyether monomethacrylates, polydimethyl siloxanes polyether monoacrylates, polydimethyl siloxanes polyether monomethacrylates etc.

In the case of multireactive diluents the mechanical properties will be comparable or even superior to that of hydrophobic coating compositions comprising solely reactive inorganic nano-particles. Examples of such diluents may include perfluoralkyl diacrylates, and polydimethylsiloxane diacrylates.

In another embodiment of the invention, the coating formulation may comprise non-reactive diluents, which do not fall under the common class of additives species, e.g. photoinitiators, adhesion promotors or anti-oxidants. Such non-reactive diluents may exhibit surface activity, thus allowing diffusion of the diluent to the coating surface. Examples of such diluents may include but are not limited to perfluoralkyls, polydimethylsiloxanes, perfluor polyethers, polydimethyl siloxanes polyethers, polydimethylsiloxanes containing alkyl chains etc.

Hydrophobic coating according to the invention may be applied to substrates that are for example flat or curved, rigid or flexible, and include both organic and inorganic substrates. Examples of suitable substrates include films of polycarbonate, polyester, polyvinyl acetate, polyvinyl pyrollidone, polyvinyl chloride, polyimide, polyethylene naphthalate, polytetrafluoro ethylene, nylon, polynorbornene. Metals, amorphous or crystalline solids may also be used as substrate, including for example steel, glass or crystalline materials, such as for example silicon or gallium arsenide.

It is a major advantage of the present invention that the coating may be applied onto the substrate by any process known in the art of wet coating deposition. Examples of suitable processes are spin coating, dip coating, spray coating, flow coating, meniscus coating, capillary coating and roll coating.

The coating composition may contain a substrate specific adhesion promoter defined as a component that improves the adhesion of the coating to the substrate. The adhesion promoter is preferably included in the coating composition before deposition in an amount ranging from 0.1 to 5 wt % based on the total weight of compounds in the coating composition. Suitable promoters for the adhesion of the film or coating to a glass or other substrates are for example acrylated trimethoxy silane monomers. Examples of silane adhesion promoters include: γ-mercaptopropylmethylmonomethoxysilane, γ-mercaptopropylmethyldimethoxysilane, γ-mercaptopropyltrimethoxysilane, γ-mercaptopropylmonoethoxysilane, γ-mercaptopropyldiethoxysilane, γ-mercaptopropyltriethoxysilane, β-mercaptoethylmonoethoxysilane, β-mercaptoethyltriethoxysilane, β-mercaptoethyltriethoxysilane, N-(2-aminoethyl)-3-aminopropylmethyldimethoxysilane, N-(2-aminoethyl)-3-aminopropyltrimethoxysilane, γ-aminopropyltriethoxysilane, γ-glycidoxylpropyltrimethoxysi lane, . γ-glycidoxyl propylmethyldimethoxysilane, 2-(3,4-epoxycyclohexyl) ethyltrimethoxysilane, . γ-chloropropylmethyldimethoxysilane, γ-chloropropyltrimethoxysilane, and γ-methacryloyloxypropyltrimethoxysilane. Examples of commercially available products of these compounds include SILAACE S310, S311, S320, S321, S330, S510, S520, S530, S610, S620, S710, S810 (manufactured by Chisso Corp.), Silquest A-174NT (manufactured by OSI Specialties ― Crompton Corp.). SH6062, AY43-062, SH6020, SZ6023, SZ6030, SH6040, SH6076, SZ6083 (manufactured by Toray-Dow Corning Silicone Co., Ltd.), KBM403, KBM503, KBM602, KBM603, KBM803, KBE903 (manufactured by Shin-Etsu Silicone Co., Ltd.), and the like. Also acidic adhesion promoters such as acrylic acid may be used. Phosphate esters such as Eb168 or Eb170 from UCB are feasible adhesion promoters.

Any other additive may be added to the coatings according to the invention. This may include, but is not limited to UV-stabilisers or oxydative stabilisers. The coating composition may also contain stabilizers such as HQMME, surface derivatizing agents, such as MTMS and/or dehydrating agents like OFM.

The reactive inorganic nano-particles are typically added to the coating composition in the form of a suspension. The same solvent as used for the suspension may be used to adjust the coating composition so that it has the desired properties. However, other solvents may also be used. Examples of solvents that may be suitable are 1,4-dioxane, acetone, acetonitrile, chloroform, chlorophenol, cyclohexane, cyclohexanone, cyclopentanone, dichloromethane, diethyl acetate, diethyl ketone, dimethyl carbonate, dimethylformamide, dimethylsulphoxide, ethanol, ethyl acetate, m-cresol, mono- and di-alkyl substituted glycols, N,N-dimethylacetamide, p-chlorophenol, 1,2-propanediol, 1-pentanol, 1-propanol, 2-hexanone, 2-methoxyethanol, 2-methyl-2-propanol, 2-octanone, 2-propanol, 3-pentanone, 4-methyl-2-pentanone, hexafluoroisopropanol, methanol, methyl acetate, methyl acetoacetate, methyl ethyl ketone, methyl propyl ketone, n-methylpyrrolidone-2, n-pentyl acetate, phenol, tetrafluoro-n-propanol, tetrafluoroisopropanol, tetrahydrofuran, toluene, xylene and water. Alcohols, ketones and esters based solvents may also be used, although the solubility of acrylates may become an issue with high molecular weight alcohols. Halogenated solvents (such as dichloromethane and chloroform) and hydrocarbons (such as hexanes and cyclohexanes), may also be suitable.

Any cross-linking method that may cause the reactive inorganic nano-particles and optionally reactive diluents to crosslink is suitable to be used in the process according to the invention. Suitable ways to initiate crosslinking are for example electron beam radiation, electromagnetic radiation (UV, Visible and Near IR), thermally and by adding moisture, in case moisture curable compounds are used. In a particularly easy and thus preferred embodiment crosslinking is achieved by UV-radiation. The UV-crosslinking may take place through a free radical mechanism or by a cationic mechanism, or a combination thereof. In another preferred embodiment the crosslinking is achieved thermally, in that way coatings may be obtained with a high glass transition temperature (Tg) that usually have better mechanical properties.

After crosslinking one or more additional processing steps may be performed, for instance a thermal treatment to enhance the crosslinking and adhesion to the substrate.

Patterning of the substrate via curing of deposited coatings is achieved through masks. Crosslinking in that case is then advantageously done via electromagnetic radiation which allows easy hydrophobic / hydrophilic patterning of surfaces. This is of interest for instance for surfaces of microarrays or microfluidic devices where fluids may be guided through hydrophobic and hydrophilic patterning,

A polymerization initiator may also be present in the coating composition to initiate the crosslinking reaction. The amount of initiator may vary between wide ranges. A suitable amount of initiator is for example between above 0 and 5 wt% with respect to total weight of the compounds that take part in the crosslinking reaction. When UV-crosslinking is used to initiate crosslinking, the mixture preferably comprises a UV-photo-initiator. A photo-initiator is capable of initiating a crosslinking reaction upon absorption of light, thus, UV-photo-initiators absorb light in the Ultra-Violet region of the spectrum. Any known UV-photo-initiators may be used in the process according to the invention.

To characterise the hydrophobicity of the prepared coatings, contact angle measurements were performed on various coatings. To correlate the surface roughness on a nanometer scale with the overall water contact angle, the surface topography was measured using a Digital Instruments atomic force microscope (AFM). The analysis was performed on sections between 2 x 2 micron and 10 x 10 micron. To analyze the roughness of the different coatings quantitatively, several parameters were calculated using Scanning Probe Image Processor software of Image Metrology. One of the methods was calculation of the Abbott curve.[ K.J. Stout & L. Blunt, Three-dimensional Surface Topography, Penton Press, 1994.]. This curve gives a good indication of the overall surface roughness.

A second useful parameter is the fractal dimension of the coating. This is a measure of the irregularity of the surface and for a coating varies between a value of 2 (perfect flat surface) and three (highest surface roughness possible). The relationship between fractal dimension and (super)hydrophobicity is already examined theoretically by Feng et al.[ L. Feng et al, Advanced Materials, 14, 1857, 2002]. Overall, for an intrinsic hydrophobic material a higher surface fractal dimension gives a higher water contact angle.

In order to determine mechanical properties of the coating, nanoindentation tests were performed on several coatings in which the hardness, reduced modulus and scratch resistance were measured. The coatings comprising reactive inorganic particles have the desired high values of hardness and scratch resistance.

### FIGURE LEGENDS

Figure 1: static water contact angle of coatings of formulations comprising nano-particles D - H.
Figure 2: static water contact angle of coatings comprising formulations described in Table 4.
Figure 3: Topography of coating from formulation 14.
Figure 4: Abbott curves of coatings from formulations 6, 7, 8, 9 & 14. Figure B is an enlargement of a section of figure A
Figure 5: Typical load function used for nanoindentation of coatings
Figure 6: Typical response curve of nanoindented coatings.

### EXAMPLES

### Example 1: Preparation of hydrophilic acrylate reactive nano-particles for reference purposes in comparative examples

Nano-silicate particles where obtained from Nissan Chemical American Corporation. Two types of nano-silicate particles were used in illustration of the invention and their properties are listed in table 1A below.

**Table 1A.**

| *Types and properties of nano-silica particles*. | | | | | | | | |
|---|---|---|---|---|---|---|---|---|
| Nano-particle | Particle Size (nm) | SiO₂ (wt%) | H₂O (%) | Viscosity (mPa.s.) | Specific Gravity | pH | Particle Shape | Solvent |
| MT-ST | 10-15 | 30-31 | < 2.0 | < 5 | 0.98-1.02 | 2-4 | Spherical | Methanol |
| IPA-ST-UP | 9-15 Elongated* | 15-16 | < 1.0 | < 20 | 0.85-0.90 | 2-4 | Elongated* | Isopropanol |

| | | | | | | | | |
|---|---|---|---|---|---|---|---|---|
| *Elongated particles have a diameter of 9-15 nm with a length of 40-300 nm. (Information source www.snowtex.com). | | | | | | | | |

The materials used in obtaining hydrophilic nano-particles with only acrylate groups are shown in Table 1B. Nanosilica oxide particles (MT-ST) were stabilized by adding a trimethoxy-silane compound comprising an acrylate group Int-12a together with a compound that inhibits polymerization of the acrylate groups, HQMME, to a suspension of the nanosilica oxide particles in methanol. A small amount of water present in the MT-ST suspension (1.7w% of total MT-ST) facilitated the silane grafting reaction. During stirring the mixture was refluxed for at least three hours at 60°C. Following this, an alkoxy silane compound, MTMS, was added and the resultant mixture was stirred and refluxed at 60°C for at least one hour. A dehydrating agent, OFM, was added and the resultant mixture was stirred and refluxed at 60°C for at least one hour.

**Table 1B.**

| Compounds in weight percentage used for preparation of reference nanoparticles A | |
|---|---|
| Material | Hydrophilic nano-particle A |
| MT-ST (nanosilica oxide , particle size 10-15nm) | 24.75% |
| Int-12A (trimethoxy silane acrylate coupling agent) | 7.84% |
| HQMME (Hydroquinnone mono-methylether, stabilizer) | 0.14% |
| MTMS (Methyltrimethoxysilane, surface derivatizating agent) | 1.23% |
| Methanol (solvent) | 57.75% |
| OFM (Trimethyl orthoformate, dehydrating agent) | 8.29% |
| Total | 100% |

The materials used in obtaining elongated, non-spherical reactive nano-particles containing acrylate groups and fluor groups are shown in Table 1C

**Table 1C.**

| Compounds in weight percentage used for preparation of reactive elongated nano particles | |
|---|---|
| Material | nano-particle B (Acry-F-IPA-ST-UP) |
| IPA-ST-UP elongated nano-silica Particle diameter 9-15nm Particle length 40-300nm | 14.37 wt-% |
| Int-12A (trimethoxy silane acrylate coupling agent) | 1.17 wt-% |
| Hydroquinnone mono-methylether (HQMME stabiliser) | 0.038 wt-% |
| Methyltrimethoxysilane (MTMS surface derivatisation agent) | |
| 1H,1H,2H,2H-(Perfluorooctyl) triethoxysilane (apolar surface derivatisation agent) | 0.678 wt-% |
| Methanol (solvent) | 1.15 wt-% |
| Isopropanol (solvent) | 81.40 wt-% |
| Trimethyl orthoformate OFM (dehydrating agent) | 1.19 wt-% |
| Total | 100 wt-% |

### Example 2: Preparation of hydrophobic reactive nano-particles C, D-G and reference particles H

The materials used in obtaining hydrophobic reactive nano-particles containing acrylate as reactive groups and fluor as apolar groups are shown in Table 2. Nanosilica oxide particles (MT-ST) were stabilized by adding a trimethoxy-silane compound comprising an acrylate group Int-12a (formula I) together with a compound that inhibits polymerization of the acrylate groups, HQMME, to a suspension of the nanosilica oxide particles in methanol. A small amount of water present in the MT-ST suspension (1.7w% of total MT-ST) facilitated the silane grafting reaction. During stirring the mixture was refluxed for at least two hours at 60°C. Following this, an perfluoralkyl trimethoxysilane compound, TDFTEOS (formula II), was added and the resultant mixture was stirred and refluxed at 60°C for at least two hours. A dehydrating agent, OFM, was added and the resultant mixture was stirred and refluxed at 60°C for one hour. This resulted in a coating composition containing hydrophobic reactive nano-particles comprising acrylate and fluor groups. This coating composition is further rerferred to as composition C and the nano-particles contained therein are referred to as nano-particles C.

**Table 2.**

| Compounds in weight percentage used for preparation of hydrophobic reactive nano-particle C | |
|---|---|
| Material | Nano particle C |
| MT-ST (nano-silica oxide, particle size 10-15nm) | 23.81 |
| Int-12A (trimethoxy silane acrylate coupling agent) | 7.71 |
| HQMME (Hydroquinnone mono-methylether, stabilizer) | 0.14 |
| TDFTEO, 1H,1H,2H,2H-Perfluoro-octyltrimethoxy-silane (surface derivatizating agent) | 4.63 |
| Methanol | 55.55 |
| OFM (Trimethyl orthoformate, dehydrating agent) | 8.17 |
| Total | 100 |

Using the same method, four additional coating compositions containing hydrophobic reactive nano-particles D ― G were prepared. Also, a reference particle without any acrylate groups (nano-particle H) was prepared. This is summarized in Table 3. In these cases, additional water was added at the beginning of the reaction, and additional OFM after completion.

**Table 3.**

| Compounds in weight percentage used for preparation of hydrophobic reactive nano-particles D - G and reference nano-particle H | | | | | |
|---|---|---|---|---|---|
| Material | nano particle D | nano particle E | nano particle F | nano particle G | Reference nano particle H |
| MT-ST (nano-silica oxide, particle size 10-15nm) | 23.15 | 23.02 | 23.48 | 23.59 | 23.67 |
| Int-12A (trimethoxy silane acrylate coupling agent) | 7.41 | 9.76 | 3.36 | 1.35 | 0 |
| HQMME (Hydroquinnone monomethylether, stabilizer) | 0.13 | 0.14 | 0.14 | 0.14 | 0.14 |
| TDFTEO (1H,1H,2H,2H-Perfluorooctyltrimethoxysilane, surface derivatizating agent) | 4.36 | 2.47 | 7.13 | 8.69 | 9.61 |
| Methanol | 51.22 | 50.92 | 51.95 | 52.18 | 52.38 |
| Water | 1.97 | 1.96 | 2.00 | 2.02 | 2.04 |
| OFM (Trimethyl orthoformate, dehydrating agent) | 11.75 | 11.73 | 11.94 | 12.03 | 12.15 |
| Total | 100 | 100 | 100 | 100 | 100 |

### Example 3: Preparation of coating compositions containing hydrophobic reactive nano-particles and diluent

Solutions of hydrophobic acrylate reactive fluor-containing nano-particle C prepared as described in Example 2 were mixed with varying ratios of perfluordecyl monoacrylate, obtained from ABCR, and varying amounts of the radical photoinitiator Irgacure 184, obtained from Ciba. The hydrophilic nano-particle A as described in Example 1 was chosen as a reference for hydrophobicity, to which 0.25 w% (with respect to solids) Irgacure 184 photoinitiator was added. The compositions of the formulations are shown in Table 4. In this way, a series of coating compositions containing reactive nano-particles was obtained with increasing fluor to acrylate ratio.

**Table 4.**

| Formulations 6-17 wherein reactive nano-particle C was mixed with reactive diluent (in this case perfluordecyl mono acrylate). | | | | | | | | | | | | |
|---|---|---|---|---|---|---|---|---|---|---|---|---|
| Formulation no. | 6 | 7 | 8 | 9 | 10 | 11 | 12 | 13 | 14 | 15 | 16 | 17 |
| Material | mg | mg | mg | mg | mg | mg | mg | mg | mg | mg | mg | mg |
| Hydrophobic reactive nanoparticle C | 1079 | 287 | 269 | 361 | 221 | 192 | 160 | 140 | 129 | 93 | 88 | 52 |
| Perfluordecyl mono acrylate | 0 | 65 | 150 | 360 | 301 | 322 | 336 | 364 | 435 | 408 | 578 | 960 |
| Photo initiator (Irgacure 184) | 3.1 | 1.45 | 1.55 | 1.8 | 1.4 | 1.65 | 1.55 | 1.8 | 1.45 | 1.7 | 1.95 | 2.4 |
| Methanol | 1978 | 538 | 508 | 676 | 419 | 373 | 315 | 283 | 258 | 198 | 194 | 138 |

### Example 4: Preparation of spincoated coatings from formulations containing hydrophobic reactive nano-particles

The formulations 6-17, as shown in Table 4, were spin-coated on substrates using a standard CONVAC spincoater. A drop of these formulations was deposited on either a glass or a silicon wafer spinning at a speed of 4800 rpm. The resultant thin wet film after spincoating was crosslinked with UV using a D-bulb under nitrogen at a dose of 1.7 J/cm2. All samples were postbaked in an oven at 70°C for one hour. The thickness of the crosslinked transparent coating on silicium wafers was measured with a multi-spectral reflectometer (F20, AG Electro optics). In the case of formulations 7 - 17 the coating roughness was too large to measure the thickness using spectral reflectometry. Their thickness was estimated to be in the range of 1 - 5 micron.

**Table 5.**

| Thickness of coating after reaction of several formulations with different solid concentrations. | | |
|---|---|---|
| | wt% of solids in methanol | Thickness (nm) |
| Formulation 6 | 36 | 1430 |
| Formulation 6 | 10.8 | 159 |
| Formulation 6 | 4.5 | 88 |
| Reference nano-particle A + 0.25w% Irgacure 184 | 5 | 83 |
| formulations 7 to 17 | 40 - 60 | Too rough to measure |

It may be concluded from these experiments that the thickness of the coatings strongly increases with the wt% of solids in solvent.

### Example 5: Measurement of water contact angle

The static contact angles were measured using the FTA (First Ten Angstroms) 200 apparatus. This piece of equipment consists of a motorised syringe pump, a sample stage and a video camera. The software used with the system is FTA Video drop shape analysis version 1.98 Build B. Before any measurements were carried out the surface tension of the water in the syringe was measured and was found to be between the values 70 - 74 mNm⁻¹. The static contact angle of a coating was measured by dispensing a 12µl droplet of distilled water onto the surface. A 130 second video clip of the droplet was taken consisting of 65 images in total. From the form of the droplet, the contact angle was calculated. At least 2 different areas of a given coating were measured, the average of these measurements is quoted as the static water contact angle.

### Example 6: Static water contact angles on coatings comprising hydrophobic nano-particles D- H

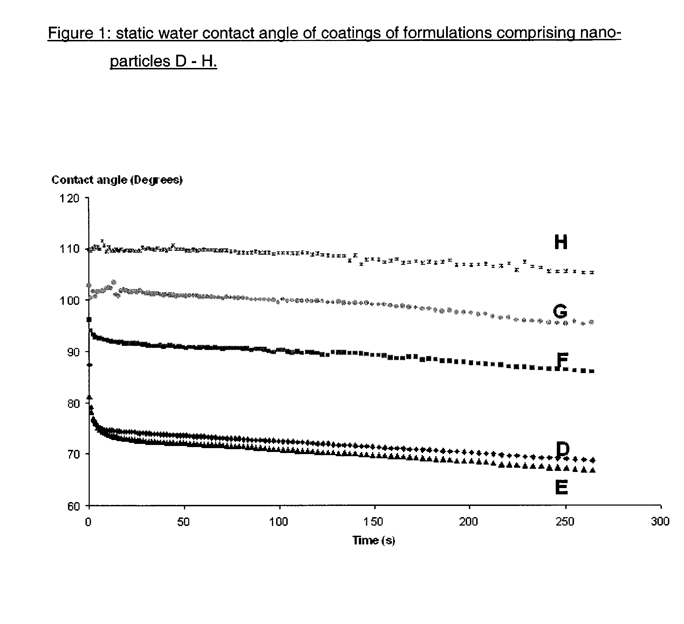

Coatings were spincoated on a silicium wafer according to Example 4. The static water contact angle was measured according to Example 5, the results are shown in Figure 1. Evidently, the water contact angle increased with increasing fluor to acrylate ratio on the nano-particle. All contact angles of formulations containing nano-particles D - H were significantly higher than that of the reference hydrophilic nano-particle A, which was 55.9°. Evidently, nano-particle H had the highest contact angle, however, as this nano-particle has no acrylate groups, this results in a non-crosslinked coating which lacks any mechanical or adhesive properties.

### Example 7: Measurement of static water contact angles of coatings from formulations 6-17

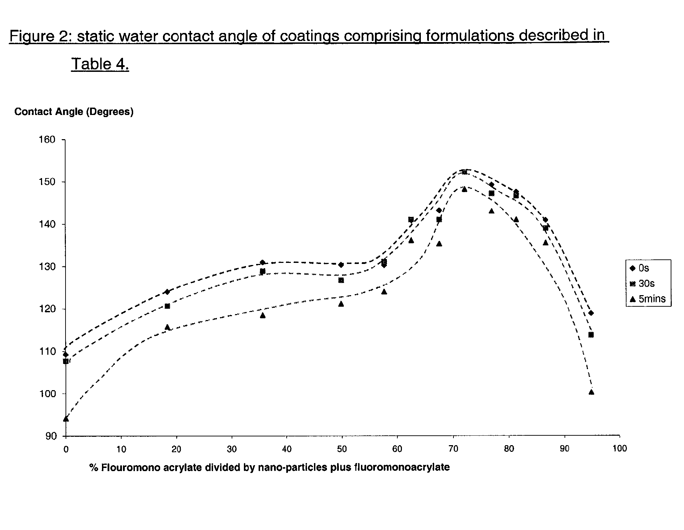

Coatings on silicium wafers were prepared from formulations 6 - 17, as described in Example 4. The static water contact angle of these coatings, measured according to Example 5, is shown in Figure 2. In figure 2 the static water contact angle is plotted against the relative amount of reactive diluent (in this case perfluor decyl monoacrylate) divided by the total amount of acrylate reactive species (in this case perfluor decyl monoacrylate plus reactive particle). From the figure it is evident that Formulation 13 had an optimum water contact angle of above 150° when a ratio of reactive diluent versus total reactive groups of 72% was used.

### Example 8: Measurement and analysis of surface topography of coatings from formulations 6, 7, 8, 9 &14.

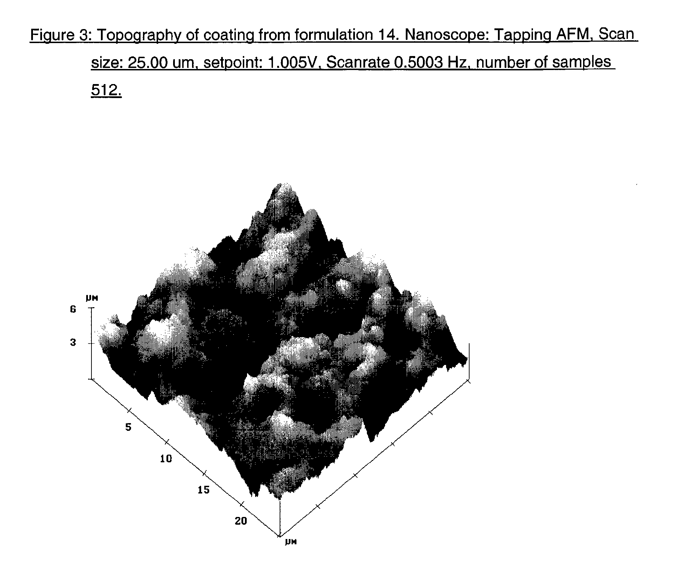

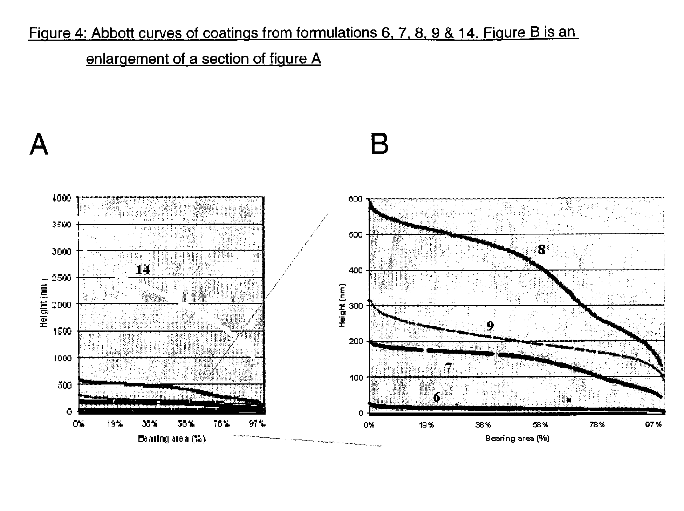

The surface topography of the coatings of formulations, prepared according to Examples 1 - 3, was measured using an Atomic Force Microscope (AFM) of Digital Instruments in tapping mode. The topography of a coating obtained with composition 14 is shown in Figure 3. For some other compositions, the values for the average width and height of the surface protrusions together with the maximum height difference are given in Table 6. As is clear from Table 6, the lateral and vertical roughness varied with the composition of the formulation. A useful way to present the AFM results is to use a so-called Abbott curve, in which the percentage of a plane at a given depth of measurement covered by material is plotted as a function of this distance. The results, shown in Figure 4, show that the vertical distribution of material was much larger in the case of Formulation 14 than that of Formulation 6, 8 or 9. The increasing roughness of the coatings of formulations 6, 8, 9 & 14 corresponded with the increasing static water contact angle, as shown in Figure 2.

**Table 6:**

| AFM data of coatings from formulations 6, 8, 9 & 14. | | | |
|---|---|---|---|
| Formulation | Average feature Height (nm) | Average feature width (nm) | Rmax (nm) |
| 6 | 5 | <50 | 19 |
| 8 | 400 | 800 | 616 |
| 9 | 100 | 500 | 252 |
| 14 | 500 | 2000 | 3000 |

### Example 9: Measurement of mechanical properties via nanoindentation

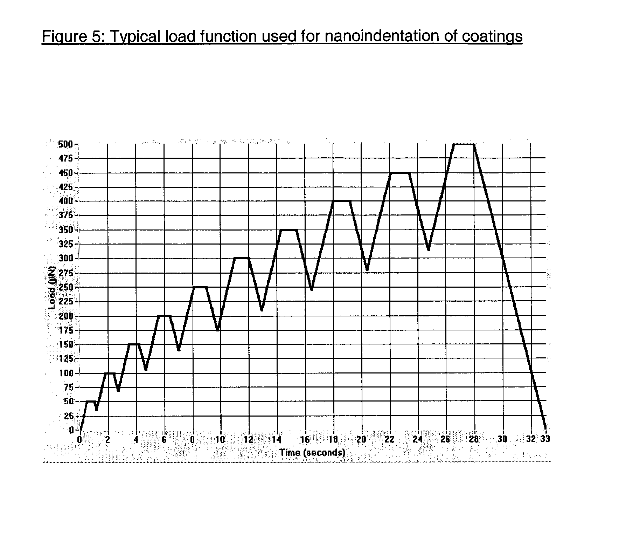

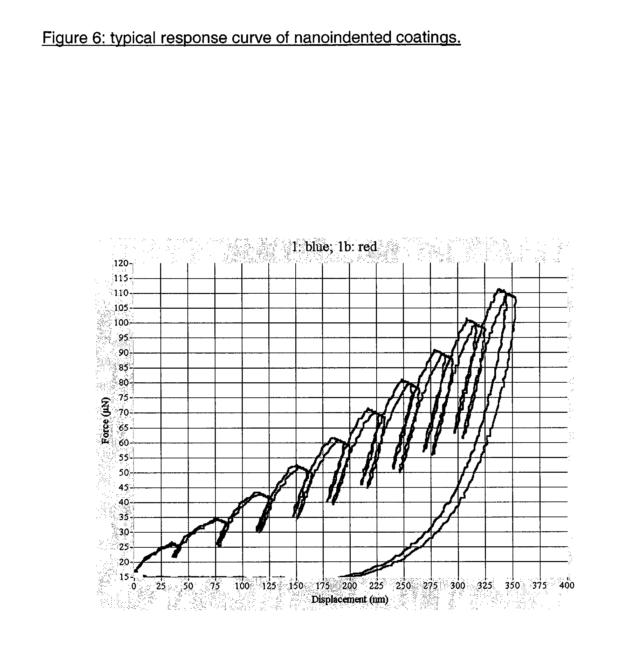

The hardness and reduced modulus of two coatings prepared according to Example 4 on a silicium wafer, was measured via nanoindentation. The nanoindentation measurements were performed with a Hysitron TriboScope, using a calibrated Berkovich diamond tip as indenter. The tip was inserted into the coatings with a known load, and the penetration depth in the coating was recorded. A typical load function used is shown in Figure 5, a typical resultant force-displacement curve is shown in Figure 6. The hardness was calculated via the relationship H (in GPa) = Fmax / 24.5 d², where Fmax is the highest load applied and d is the penetration depth. The reduced modulus was calculated from the force ― displacement curve Er = 0.5 (π/24.5 d²)^{1/2} (δF/δd). More details concerning nano-indentation experiments may be found in F.J. Balta Calleja & S. Fakirov, Microhardness of Polymer, Cambridge Un. Press, 2000.

The results of the nanoindentation on two coatings are shown in Table 7. The hardness and reduced modulus of the resultant coating of the nano-particles with perfluoroctyl chains only slightly decreased in comparison to the coatings obtained with reference nano-particle A. In comparison to thermoplastics like PMMA, however, the coatings according to the invention still have a higher reduced modulus and display a far better hardness

**Table 7**

| Hardness and reduced modulus of a coating obtained with formulation 6 in comparison to reference coatings | | |
|---|---|---|
| Coating of formulation | Hardness (GPa) | Reduced modulus (GPa) |
| nano-particle A + 0.25% Irgacure 184 | 1.2 | 24 |
| Formulation 6 | 0.5 | 14 |
| PMMA | 0.2 | 1-2 |

## Claims

1. A coating composition comprising reactive inorganic nano-particles

2. A coating composition according to claim 1 also comprising a reactive diluent.

3. A coating composition according to claim 1 in which the reactive inorganic nano-particles are spherical.

4. A coating composition according to claim 1 in which the reactive inorganic nano-particles are elongated.

5. A coating composition according to claim 1 in which the size of the primary axis of the reactive inorganic nano-particles is less than 350 nm.

6. A coating composition according to claim 1 wherein the reactive inorganic nano-particles comprise 10 - 100 wt% of the coating composition.

7. A coating composition according to claims 2-6 wherein the diluent contains apolar groups.

8. A coating composition according to claims 1-7 additionally comprising at least one adhesion promoter.

9. A hydrophobic coating, obtainable by the steps of:
Providing a substrate applying a coating composition according to claims 1-8 to the surface of the substrate crosslinking the coating composition

10. A hydrophobic coating with a surface roughness where the dimensions of the features on the surface are larger than or equal to the smallest cross-sectional dimension of an individual nano-particle after cross-linking.

11. A hydrophobic coating according to claims 9 and 10 wherein crosslinking is performed by electromagnetic radiation such as UV light and/or thermally.

12. A hydrophobic coating according to claims 9-11 that has a static water contact angle > 90°, preferably > 120° even more preferably > 140 °

13. A hydrophobic coating according to claims 9-12 that has a static water contact angle > 140° and that reduces the optical transmission of the substrate by at least 7% in at least a range of wavelengths of the visible electromagnetic spectrum.

14. A hydrophobic coating according to claims 9-13 that exhibits easy cleanability.

15. A hydrophobic coating according to claims 9-14 containing alternating hydrophilic and hydrophobic domains.

16. A process for obtaining a substrate with a hydrophobic coating comprising the steps of:
Providing a substrate
applying a coating composition according to claims 1-8 to the surface of the substrate
crosslinking the coating composition

17. Reactive inorganic nano-particles comprising a reactive group and an apolar group.

18. Reactive inorganic nano-particles according to claim 17 suitable for use in a process according to claim 16.

19. A curable composition comprising reactive inorganic particles comprising;
i. A metallic oxide particle.
ii. An organic compound chemically bonded to the particle wherein the organic compound has a reactive group.
iii. An organic compound chemically bonded to the particle wherein the organic compound has an apolar organic functionality.

20. A composition according to claim 19 wherein the metallic oxide is chosen from oxides of silicon, aluminum, zirconium, titanium, zinc, germanium, indium, tin, antimony, and cerium.

21. A composition according to claim 19 or 20 wherein the particles are spherical.

22. A composition according to claim 19 to 21 wherein the particles are non-spherical.

23. A composition according to claims 19 to 22 wherein the reactive group is chosen from the group consisting of acrylates, methacrylates, vinyllic species or epoxies.

24. A composition according to claims 19 to 23 wherein the particles have a diameter measured over the primary axis of less than 350 nanometers.

25. A composition according to claims 19 to 24 wherein the apolar organic functionality consists of a fluorinated group.

26. A composition according to claims 19 to 25 wherein the ratio of organic reactive compounds to organic apolar compounds is within 0.1 to 1000.

27. A finished article comprising a coating according to claims 9 to 15
